# EUROPÄISCHE PATENTSCHRIFT

(11) **EP 4 211 053 B1**
(45) Veröffentlichungstag und Bekanntmachung des Hinweises auf die Patenterteilung: **29.01.2025**
(21) Anmeldenummer: 21773328.6
(22) Anmeldetag: 02.09.2021
(51) Int. Cl.: B65D 85/804, B65D 21/08, B65D 25/16

(54) **AUFGUSSBEHÄLTER MIT EINEM EINLASSVENTIL**
INFUSION CONTAINER WITH AN INLET VALVE
RÉCIPIENT D'INFUSION AVEC UNE SOUPAPE D'ENTRÉE

(30) Priorität: 10.09.2020 CH 11362020
(43) Veröffentlichungstag der Anmeldung: 19.07.2023
(73) Patentinhaber: Swiss Tea Innovation AG, 4600 Olten (CH)
(72) Erfinder: WÜST, Theodor, 8620 Wetzikon (CH); DEL BON, Franco, 4663 Aarburg (CH); SCHERRER, Joseph Alain, 4612 Wangen b. Olten (CH)
(74) Vertreter: Bohest AG Branch Ostschweiz
(86) Internationale Anmeldenummer: PCT/EP2021/074277
(87) Internationale Veröffentlichungsnummer: WO 2022/053393

(56) Entgegenhaltungen:
- EP-A1- 3 119 245
- WO-A1-2011/154672
- DE-A1- 102010 030 988
- DE-T2- 69 104 106

## Beschreibung

Die vorliegende Erfindung betrifft einen Aufgussbehälter umfassend ein Einlassventil gemäss dem unabhängigen Anspruch 1.

Unter einem Aufgussgetränk wird im Zusammenhang mit der vorliegenden Erfindung jede Art von Getränk verstanden, das ausgehend von einer Aufgusstrockensubstanz durch Kontaktierung mit einer kalten oder heissen Aufgussflüssigkeit zubereitet werden kann. Ein typisches Aufgussgetränk ist beispielsweise Tee, der durch Aufbrühen von Teeblättern oder Kräutern mit heissem Wasser zubereitet wird.

Es ist bekannt, dass unterschiedliche Teesorten zur optimalen Entfaltung ihres Aromas ein vergleichsweise langes Brühen von einigen Minuten Dauer erfordern. Die Kontaktzeit zwischen den Teeblättern und dem Brühwasser muss daher ausreichend lang sein. Mit der EP 3 119 245 B1 ist eine Teezubereitungsvorrichtung und ein Verfahren bekannt geworden, welches es ermöglicht, eine abgemessene Menge einer Aufgusstrockensubstanz über eine bestimmte Kontaktierungsdauer mit einer Aufgussflüssigkeit in Kontakt zu bringen. Dies wird durch einen expandierbaren Aufgussbehälter ermöglicht. Um die Aufgussflüssigkeit in den Behälter zu bringen, wird ein Deckel dieses Behälters mit einer Füllnadel durchstochen und durch diese Füllnadel die Aufgussflüssigkeit in den Behälter eingebracht.

Dieser Vorgang ist mit einem nicht geringen Kraftaufwand verbunden. Die Füllnadel kann abstumpfen, was den Kraftaufwand zum Durchstechen erhöht und somit zu einer Fehlmanipulation führen kann. Die Notwendigkeit einer Hohlnadel als Füllnadel limitiert den Durchfluss in den Aufgussbehälter. DE 10 2010 030988 A1 offenbart einen Aufgussbehälter gemäß dem Oberbegriff des Anspruchs 1.

Es ist Aufgabe der Erfindung zumindest einen oder mehrere Nachteile des Standes der Technik zu beheben. Insbesondere soll ein

Einlassventil für einen Aufgussbehälter bereitgestellt werden, das eine sichere, einfache und insbesondere reproduzierbare Bedienung ermöglicht und vorzugsweise eine genügend grosse Öffnung zum Einbringen der Aufgussflüssigkeit in den Aufgussbehälter bereitstellen kann.

Diese Aufgabe wird durch die in dem unabhängigen Patentanspruch 1 definierte Vorrichtung gelöst. Weitere Ausführungsformen ergeben sich aus den abhängigen Patentansprüchen.

Ein erfindungsgemässer Aufgussbehälter zur Aufnahme einer Aufgusstrockensubstanz umfasst ein Einlassventil das eine Verschlusskappe und einen Ventilkörper aufweist. Die Verschlusskappe und der Ventilkörper sind über eine Materialdünnstelle auftrennbar miteinander verbunden.

Die Verbindung der Verschlusskappe mit dem Ventilkörper über eine Materialdünnstelle ermöglicht es, diese beiden Elemente mit wenig Kraftaufwand voneinander zu trennen und, entlang der aufgebrochenen Materialdünnstelle, eine Einfüllöffnung bereitzustellen, durch die die Aufgussflüssigkeit in den Aufgussbehälter eingebracht werden kann.

Die Verschlusskappe ermöglicht es zudem, diese auf einem entsprechenden Gegenstück, wie beispielsweise einem Auflager, zu führen und/oder zu halten.

Es kann vorgesehen sein, dass die Verschlusskappe einen Grundkörper und eine sich davon erstreckende, entlang des Grundkörpers umlaufende, Wandung aufweist.

Die umlaufende Wandung ermöglicht ein gleichmässiges, insbesondere positionsunabhängiges, Führen der Verschlusskappe auf einem entsprechenden Gegenstück. Durch die Ausbildung eines Grundkörpers kann ein definierter Anschlag geschaffen werden, der eine Bewegung der Verschlusskappe in Richtung der Wandung beschränkt.

Die Wandung kann daher insbesondere hohlzylindrisch ausgebildet sein und ein erstes Ende und ein zweites Ende aufweisen. Das erste Ende schliesst an den Grundkörper an und das zweite Ende schliesst an die Materialdünnstelle an.

Dies erlaubt eine einfache, kostengünstige und insbesondere reproduzierbare Fertigung.

Vorzugsweise ist die Materialdünnstelle um die Verschlusskappe umlaufend ausgebildet.

Die Verschlusskappe kann somit vollständig vom Ventilkörper abgetrennt werden was eine nachfolgende relative Bewegung zwischen dem Ventilkörper und der Verschlusskappe ermöglicht.

Die Materialdünnstelle kann als Abrissfilm ausgebildet sein. Ein Abrissfilm ist eine Stelle im Material mit einer im Verhältnis zur Breite geringen Höhe, respektive Dicke. Ein Abrissfilm ist typischerweise dicker als 10 µm und überschreitet vorzugsweise eine Dicke von 500 µm nicht. Er ist insbesondere höchstens halb so dick wie eine daran anschliessende Wandung.

Der Ventilkörper kann eine sich radial zu einem Zentrum des Einlassventils hin erstreckende Ventilbasis aufweisen die an die Materialdünnstelle anschliesst.

Der Ventilkörper ist somit über diese Ventilbasis zur Materialdünnstelle hin beabstandet. Die Materialdünnstelle ist damit zugänglich.

An der Ventilbasis kann zur Bildung einer Stufe eine sich von der Ventilbasis erstreckende, entlang der Ventilbasis umlaufende, Wandung angeordnet sein. Diese Wandung ist also Bestandteil des Ventilkörpers.

Die umlaufende Wandung ermöglicht es, im Ventilkörper ein entsprechendes Gegenstück, wie beispielsweise einen Einfüllstutzen, aufzunehmen und diesen entlang der Ventilbasis zu führen. Durch die umlaufende Anordnung der Wandung kann ein entsprechender Einfüllstutzen, insbesondere positionsunabhängig, geführt werden. Zudem ist es ermöglicht, eine umlaufende Abdichtung zwischen dieser Wandung und einem entsprechenden Einfüllstützen einfach bereitzustellen.

Diese Wandung kann hohlzylindrisch ausgebildet sein und ein erstes Ende und ein zweites Ende aufweisen. Das erste Ende schliesst an die Ventilkörperbasis an und das zweite Ende schliesst an einen, sich davon radial nach aussen erstreckenden, Basiskörper an.

Dies erlaubt eine einfache, kostengünstige und insbesondere reproduzierbare Fertigung.

Vorzugsweise sind die Wandung des Ventilkörpers und die Wandung der Verschlusskappe im Wesentlichen konzentrisch zueinander angeordnet.

Dabei erstrecken sich die Wandungen vorzugsweise im Wesentlichen über die gleiche Länge.

Die Wandung des Ventilkörpers und die Wandung der Verschlusskappe können gemeinsam mit der Ventilkörperbasis ein im Wesentlichen U-förmiges Querschnittsprofil aufweisen. Die Materialdünnstelle ist entsprechend am Grund des U-förmigen Profils angeordnet.

Eine derartige Konfiguration ermöglicht es, ein entsprechendes Einlassventil derart in einem Deckelteil eines Aufgussbehälters anzuordnen, dass dieses innerhalb des Deckelteils versenkt ist und nicht über das Deckelteil übersteht.

Die Wandungen können in Richtung der Materialdünnstelle auch zueinander zulaufen, also konisch ausgebildet sein. Dabei kann jede Wandung eine Schräge von bis zu 5° aufweisen.

Dies erleichtert einerseits die Fertigung, andererseits kann durch eine derartige konische Ausbildung eine zuverlässige Verbindung zwischen den Wandungen und einem entsprechenden Gegenstück, wie beispielsweise einem Auflager oder einem Einfüllstutzen, geschaffen werden.

Insbesondere ist der Grundkörper der Verschlusskappe im Wesentlichen in einer gleichen Ebene angeordnet wie ein Basiskörper des Ventilkörpers und vorzugsweise in einer Richtung zum Inneren des Aufgussbehälters hin versetzt.

Der Basiskörper kann dabei insbesondere als integraler Bestandteil eines Deckelteils eines Aufgussbehälters ausgebildet sein.

Am Basiskörper und/oder an der Ventilbasis können ein Auflageelement oder mehrere Auflageelemente ausgebildet sein.

Dadurch kann ein definierter Abstand geschaffen werden und/oder eine Bewegung eines entsprechenden Elementes eingeschränkt werden.

Diese Auflageelemente können jeweils mit entsprechenden Gegenstücken an dem Aufgussbehälter, insbesondere an einem Bodenteil des Aufgussbehälters, zusammenwirken.

Das Einlassventil, insbesondere die Verschlusskappe und/oder der Ventilkörper, können in einem Spritzgussverfahren aus Kunststoff, insbesondere aus einem biologisch abbaubaren Kunststoff, vorzugsweise aus einem bio-basierten Kunststoff, gefertigt sein.

Die Erfindung betrifft einen Aufgussbehälter zur Aufnahme einer Aufgusstrockensubstanz für die Zubereitung eines Aufgussgetränks. Der Aufgussbehälter umfasst ein Bodenteil, ein Deckelteil und ein das Bodenteil und das Deckelteil verbindendes Wandteil und ein Einlassventil wie vorliegend beschrieben. Das Einlassventil ist im Deckelteil ausgebildet.

Dies ermöglicht eine einfache und integrale Fertigung zumindest des Deckelteils des Aufgussbehälters. Ein zusätzlicher Arbeitsschritt zum Anbringen eines entsprechenden Ventils ist überflüssig.

Der Aufgussbehälter ist expandierbar, wobei insbesondere das Wandteil eine variable Länge aufweist.

Dies ermöglicht einerseits das Aufquellen einer sich im Aufgussbehälter befindlichen Aufgusstrockensubstanz, andererseits kann der Aufgussbehälter vor dem Gebrauch mit wenig Platzbedarf transportiert und gelagert werden.

Der Aufgussbehälter kann, mit Ausnahme des vorliegend beschriebenen Einlassventils, insbesondere entsprechend dem Aufgussbehälter, der in der EP 3 119 245 B1 beschrieben und beansprucht ist, ausgebildet sein. Der Aufgussbehälter ist somit insbesondere zur Aufnahme einer Aufgussflüssigkeit flüssigkeitsdicht ausgebildet und dazu ausgebildet, durch Einbringung von Aufgussflüssigkeit von einer kollabierten Gestalt in eine expandierte Gestalt ausgedehnt zu werden. Er ist mit einem sich vorzugsweise bei Überschreiten eines Überdrucks im Aufgussbehälter öffnenden Auslassventil ausgestattet. Dieses Auslassventil ist im Bodenteil angeordnet. Das Auslassventil kann jedoch auch als mechanisch öffnenbares Ventil ausgebildet sein.

Der vorliegend beschriebene Aufgussbehälter eignet sich insbesondere zur Durchführung des Verfahrens, welches in der EP 3 119 245 B1 beschrieben und beansprucht ist. Bei dem Verfahren handelt es sich insbesondere um ein Verfahren bei dem eine abgemessene Menge einer Aufgusstrockensubstanz mit einer abgemessenen Menge einer Aufgussflüssigkeit in Kontakt gebracht wird und dadurch das Aufgussgetränk entsteht. Die Aufgusstrockensubstanz wird in dem Aufgussbehälter bereitgestellt, der zunächst in einer kollabierten Gestalt vorliegt und in eine expandierte Gestalt ausdehnbar ist. Die Aufgussflüssigkeit wird in den Aufgussbehälter eingebracht. Der Aufgussbehälter wird expandiert, sodass die Aufgusstrockensubstanz im Aufgussbehälter zur Bildung des Aufgussgetränks während einer Kontaktierungsdauer mit der Aufgussflüssigkeit in Kontakt gehalten wird. Dann wird der Aufgussbehälter durch Zusammendrücken zumindest teilweise in seine kollabierte Gestalt zurückgeführt und dabei wird das Aufgussgetränk mindestens teilweise aus dem Aufgussbehälter ausgetrieben.

Am Bodenteil des Aufgussbehälters kann ein Auflager zur Anlage der Verschlusskappe angeordnet sein.

Durch ein derartiges Auflager kann die Verschlusskappe relativ zum Bodenteil in einer spezifischen Lage gehalten werden. Zudem ermöglicht es ein derartiges Auflager, dass Kräfte, die beispielsweise auf die Verschlusskappe wirken, über das Bodenteil aufgenommen werden.

Eine Führung der Verschlusskappe kann ebenfalls durch ein derartiges Auflager bereitgestellt werden.

Dabei kann insbesondere vorgesehen sein, dass das Auflager mit einer entsprechenden Wandung der Ventilkappe des Einlassventils zusammenwirkt. Dazu kann das Auflager beispielsweise eine im Wesentlichen zylindrische Wandung aufweisen die mit einer entsprechend ausgebildeten hohlzylindrischen Wandung der Verschlusskappe, wie vorliegend beschrieben, zusammenwirkt.

Beide Wandungen können komplementär und leicht konisch ausgebildet sein, sodass eine Bewegung der Wandungen gegeneinander zum Verklemmen dieser Wandungen führt.

Das Auflager kann zudem derart ausgebildet sein, dass dieses eine Bewegung der Verschlusskappe beschränkt.

Das Auflager kann an einer Ausgabeöffnung des Aufgussbehälters angeordnet sein und zumindest bereichsweise als ein Filtersieb ausgebildet sein.

Diese Ausbildung verhindert einerseits, dass die Aufgusstrockensubstanz zusammen mit dem Aufgussgetränk aus dem Aufgussbehälter ausgegeben wird und andererseits kann durch die entsprechende Ausbildung als Auflager eine Doppelfunktion bereitgestellt werden, wobei das Auflager dabei insbesondere die vorliegend beschriebene Führung und Begrenzung der Bewegung der Verschlusskappe bereitstellen kann. Zudem ermöglicht es eine derartige Ausbildung, dass der Aufgussbehälter auf eine einfache Weise in der kollabierten Form gehalten werden kann.

Das Auflager kann also ein Führungselement zur Führung der Verschlusskappe aufweisen.

Vorzugsweise schliesst der Ventilkörper an das Wandteil an, wobei insbesondere der Basiskörper des Ventilkörpers an das Wandteil anschliesst.

Durch diese Ausbildung ist ein Deckelteil bereitgestellt, welches das Einlassventil beinhaltet. Mit anderen Worten ist das Einlassventil einstückig ausgebildet und stellt das Deckelteil bereit.

Dies erlaubt eine einfache und kostengünstige Fertigung und den Verzicht auf weitere Elemente und/oder Bestandteile.

Anhand von schematischen Figuren wird die Erfindung nachfolgend anhand eines Ausführungsbeispiels im Detail erläutert. Es zeigt:
- Figur 1:: Eine perspektivische Schnittansicht eines Aufgussbehälters;
- Figur 2A:: eine perspektivische Ansicht des Aufgussbehälters aus der Figur 1 in einer kollabierten Form;
- Figur 2B:: eine perspektivische Ansicht des Aufgussbehälters der Figur 2A in einer expandierten Form;
- Figur 3:: eine Detailansicht des Einlassventils aus der Figur 1;
- Figur 4:: die Detailansicht aus der Figur 3 mit aufgebrochenem Einlassventil.

Der besseren Übersichtlichkeit halber wurde in sämtlichen Figuren auf die Darstellung einer sich gegebenenfalls im Aufgussbehälter 20 befindlichen Aufgusstrockensubstanz verzichtet.

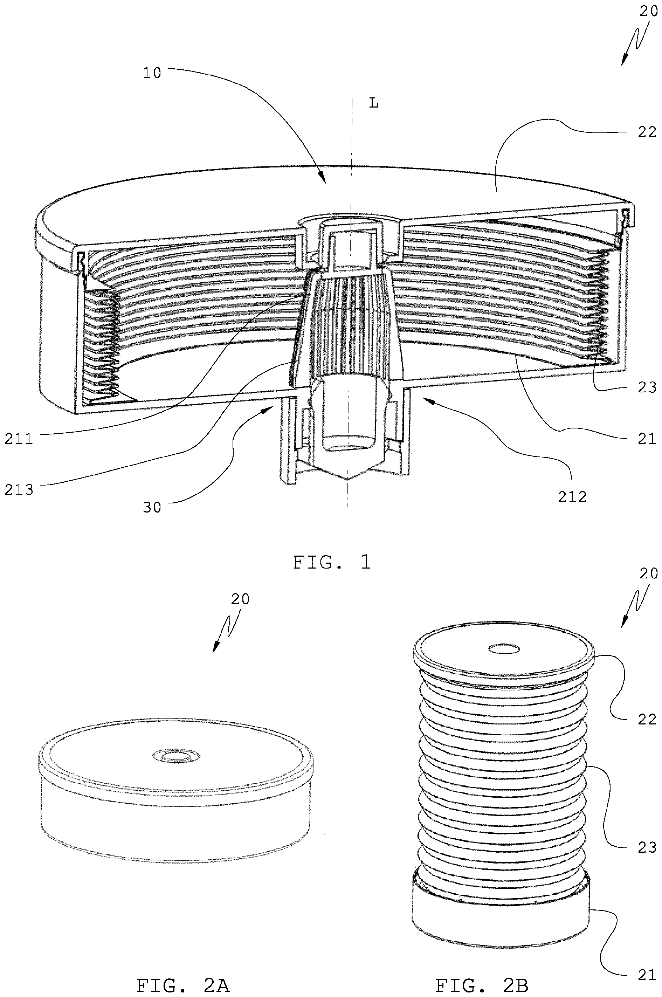

Figur 1 zeigt eine perspektivische Schnittansicht eines Aufgussbehälters 20. Der Aufgussbehälter 20 weist ein Einlassventil 10 und ein Auslassventil 30 mit einer Ausgabeöffnung 212 auf. Der Aufgussbehälter selbst umfasst ein Bodenteil 21, ein Deckelteil 22 sowie ein Wandteil 23. Das Wandteil 23 ist expandierbar und vorliegend in der Form eines Faltenbalges ausgebildet und aus einem flexiblen Kunststoff gefertigt. Das Wandteil 23 ist einerseits flüssigkeitsdicht mit dem Bodenteil 21 verbunden und andererseits flüssigkeitsdicht mit dem Deckelteil 22. Dieses Wandteil 23 ist vom Bodenteil 21 und vom Deckelteil 22 umschlossen. Dazu ist am Bodenteil 21 an seiner Peripherie eine sich in Richtung des Deckelteils 22 erstreckende Wandung vorgesehen. Wie in der Figur 1 ersichtlich ist, ist das Einlassventil 10 als integraler Bestandteil des Deckelteils 22 ausgebildet.

Das Einlassventil 10 ist auf einem Auflager 211 angeordnet und damit entsprechend zum Bodenteil 21 beabstandet. Das Auflager 211 ist vorliegend als integraler Bestandteil des Bodenteils 21 ausgebildet.

Der Aufgussbehälter 20 gemäss der Figur 1 ist im Wesentlichen rotationssymmetrisch ausgebildet und weist eine zentrale Achse L auf. Diese definiert ebenfalls eine axiale Richtung. Auch bei nicht rotationssymmetrischen Ausbildungen des Aufgussbehälters 20 ist eine zentrale Achse vorhanden. Diese ist im Wesentlichen durch die Verbindung von Einlassventil 10 und Auslassventil 30 definiert. Ebenfalls durch das Einlassventil 10 und das Auslassventil 30 ist eine Strömungsrichtung definiert die vom Einlassventil 10 zum Auslassventil 30 läuft.

Die Figur 2A zeigt eine perspektivische Ansicht des Aufgussbehälters 20 aus der Figur 1 in einer kollabierten Form. Wie aus der Figur 2A und aus der Figur 1 ersichtlich ist, ist in der kollabierten Form das Bodenteil 21 über die an ihrer Peripherie angeordnete Wandung mit entsprechenden Aufbrechelementen mit dem Deckelteil 22 verbunden.

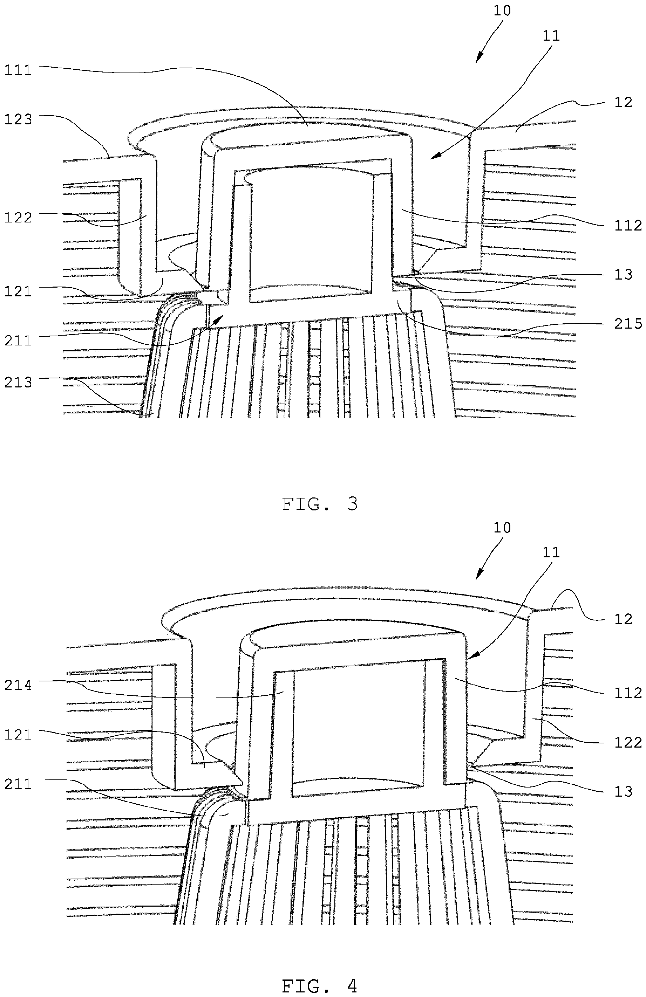

Die Figur 2B zeigt eine perspektivische Ansicht des Aufgussbehälters aus der Figur 2A in einer expandierten Form. Durch das Einbringen eines Überdrucks über das Einlassventil 10 (siehe Figur 1) wurden die Aufbrechelemente der Wandung des Bodenteils 21 aufgebrochen und das Wandteil 23 durch das Einfüllen von Aufgussflüssigkeit in den Aufgussbehälter 20 expandiert. Es versteht sich, dass vor dem Einbringen des Überdrucks die Materialdünnstellen 13 des Einlassventils 10 aufgebrochen wurden, wie nachfolgend unter Bezugnahme auf die Figuren 3 und 4 erläutert wird. Der Aufgussbehälter 20 bleibt nachfolgend über eine vorbestimmte Zeit in dieser expandierten Form und wird im Anschluss zum Ausbringen des Aufgussgetränks zusammengedrückt. Durch das Zusammendrücken oder eine zusätzliche Vorrichtung wird das Auslassventil 30 (siehe dazu Figur 1) geöffnet und das Aufgussgetränk durch dieses Auslassventil 30 ausgegeben.

Die Figur 3 zeigt eine Detailansicht des Einlassventils 10 aus der Figur 1 in einer Schnittansicht gemäss der Figur 1. Das Einlassventil 10 weist eine Verschlusskappe 11 und einen Ventilkörper 12 auf. Die Verschlusskappe 11 weist einen Grundkörper 111 auf und eine sich von diesem Grundkörper 111 erstreckende Wandung 112. Die Wandung 112 erstreckt sich in Richtung des Inneren des Aufgussbehälters 20 und vorliegend in Richtung des Bodenteils 21 in welchem das Auslassventil 30 (siehe dazu Figur 1) angeordnet ist. Die Wandung 112 ist als hohlzylindrische Wandung ausgebildet, wobei ein erstes Ende der Wandung 112 an den Grundkörper 111 anschliesst und ein zweites Ende der Wandung 112 an eine Materialdünnstelle 13 anschliesst. Die Materialdünnstelle 13 ist zwischen der Verschlusskappe 11 und dem Ventilkörper 12 angeordnet. Die Materialdünnstelle 13 ist entlang der Wandung 112 umlaufend ausgebildet. Sie schliesst an eine sich vom Zentrum des Einlassventils 10 radial erstreckende Ventilkörperbasis 121 an. Die Ventilkörperbasis 121 ist Teil des Ventilkörpers 12. Der Ventilkörper 12 umfasst also die Ventilkörperbasis 121 und eine entlang dieser Ventilkörperbasis 121 umlaufende Wandung 122. Diese Wandung 122 schliesst an einen Basiskörper 123 an. Der Basiskörper 123 ist vorliegend als integraler Bestandteil des Deckelteils 22 (siehe Figur 1) ausgebildet.

Der Basiskörper 123 und der Grundkörper 111 liegen im Wesentlichen in einer Ebene. Die jeweiligen Wandungen 122 und 112 erstrecken sich von dieser Ebene in Richtung des Auslassventils 30 und entsprechend in Richtung der Materialdünnstelle 13. Die beiden Wandungen 122 und 112 bilden gemeinsam mit der Ventilkörperbasis 121 einen im Wesentlichen U-förmigen Querschnitt wobei die Materialdünnstelle 13 am Grund dieses Querschnitts ausgebildet ist. Die beiden Schenkel des U's, bereitgestellt durch die Wandungen 122 und 112, sind in Richtung der Materialdünnstelle 13 leicht konisch zulaufend.

Die Verschlusskappe 11 weist gesamt eine im Wesentlichen hutförmige Ausbildung auf. Die Verschlusskappe 11 ist in Wirkverbindung mit einem Auflager 211 und an diesem in axialer Richtung geführt. Dazu weist dieses ein Führungselement 214 (siehe Figur 4) auf. Wie in der Figur 3 illustriert ist, ist das Ende der Wandung 112, an welches die Materialdünnstelle 13 anschliesst, zu einem entsprechenden Gegenstück des Auflagers 211 axial beabstandet. Das Gegenstück am Auflager 211 ist als eine umlaufende Schulter 215 ausgebildet.

Die Figur 3 zeigt gesamthaft eine Konfiguration in welcher der Aufgussbehälter 20 kollabiert ist und die Materialdünnstelle 13 noch nicht aufgebrochen ist, mit anderen Worten entspricht dies einem Auslieferungszustand.

Die Figur 4 zeigt die Detailansicht aus der Figur 3 mit aufgebrochenen Einlassventil 10, bzw. mit aufgebrochener Materialdünnstelle 13. Zum Aufbrechen der Materialdünnstelle 13 wird die Verschlusskappe 11 in Richtung des Auflagers 211 gedrückt, bis ein unteres Ende der Wandung 112 der Verschlusskappe 11 in Anschlag mit der umlaufenden Schulter 215 des Auflagers 211 ist. Durch diese Relativbewegung der Verschlusskappe 11 zum Ventilkörper 12 wird die Materialdünnstelle 13 aufgebrochen. Es entsteht eine Einfüllöffnung entlang der aufgebrochenen Materialdünnstelle 13.

Das Auflager 211 weist einen Filtersieb 213 auf und ist in Strömungsrichtung vor dem Auslassventil 30 (siehe dazu Figur 1) angeordnet. Am Auflager 211 ist ein Führungselement 214 ausgebildet das in Wirkverbindung mit der Wandung 112 ist und für die Wandung 112 eine axiale Führung bereitstellt. Der Ventilkörper 12, dessen Basiskörper 123 als integraler Bestandteil des Deckelteils 22 ausgebildet ist, ist auf der umlaufenden Wandung des Bodenteils 21 (siehe dazu Figur 1) abgestützt. Eine Kraft, die auf den Ventilkörper 12 wirkt, wird also im Bodenteil 21 aufgenommen. In Bezug zum Auflager 211 kann der Ventilkörper 12 somit seine relative Lage halten. Bei einer Krafteinwirkung auf die Verschlusskappe 11 und durch das Verschieben der Verschlusskappe 11 in axialer Richtung entstehen Scherkräfte in der Materialdünnstelle 13 die diese aufbrechen.

Es kann beispielsweise zusätzlich vorgesehen sein, im Bereich der Schulter 215 des Auflagers 211 radial ausserhalb der Materialdünnstelle 13 weitere Elemente vorzusehen, die beispielsweise die Ventilbasis 121 abstützen können. Alternativ kann auch vorgesehen sein, an der Ventilbasis 121 Auflageelemente vorzusehen, die insbesondere mit der Schulter 215 zusammenwirken und die Ventilbasis 121 auf der Schulter 215 abstützen.

## Patentansprüche

1. Aufgussbehälter (20) zur Aufnahme einer Aufgusstrockensubstanz für die Zubereitung eines Aufgussgetränks, umfassend ein Bodenteil (21), ein Deckelteil (22) und ein das Bodenteil (21) und das Deckelteil (22) verbindendes Wandteil (23) und ein Einlassventil (10), wobei das Einlassventil (10) im Deckelteil (22) ausgebildet ist, wobei das Einlassventil (10) eine Verschlusskappe (11) und einen Ventilkörper (12) aufweist, wobei die Verschlusskappe (11) und der Ventilkörper (12) über eine Materialdünnstelle (13) miteinander auftrennbar verbunden sind, **dadurch gekennzeichnet, dass** der Aufgussbehälter (20) expandierbar ist, wobei insbesondere das Wandteil (23) eine variable Länge aufweist.

2. Aufgussbehälter (20) nach Anspruch 1, **dadurch gekennzeichnet, dass** die Verschlusskappe (11) einen Grundkörper (111) und eine sich davon erstreckende, entlang des Grundkörpers (111) umlaufende, Wandung (112) aufweist.

3. Aufgussbehälter (20) nach Anspruch 2, **dadurch gekennzeichnet, dass** die Wandung (112) hohlzylindrisch ausgebildet ist und ein erstes Ende und ein zweites Ende aufweist, wobei das erste Ende an den Grundkörper (111) anschliesst und das zweite Ende an die Materialdünnstelle (13) anschliesst.

4. Aufgussbehälter (20) nach einem der Ansprüche 1 bis 3, **dadurch gekennzeichnet, dass** die Materialdünnstelle (13) um die Verschlusskappe (11) umlaufend ausgebildet ist.

5. Aufgussbehälter (20) nach einem der Ansprüche 1 bis 4, **dadurch gekennzeichnet, dass** die Materialdünnstelle (13) als Abrissfilm ausgebildet ist.

6. Aufgussbehälter (20) nach einem der Ansprüche 1 bis 5, **dadurch gekennzeichnet, dass** der Ventilkörper (12) eine sich radial zu einem Zentrum hin erstreckende Ventilbasis (121) aufweist die an die Materialdünnstelle (13) anschliesst.

7. Aufgussbehälter (20) nach Anspruch 6, **dadurch gekennzeichnet, dass** an der Ventilbasis (121) zur Bildung einer Stufe eine sich davon erstreckende, entlang der Ventilbasis (121) umlaufende, Wandung (122) angeordnet ist.

8. Aufgussbehälter (20) nach Anspruch 7, **dadurch gekennzeichnet, dass** die Wandung (122) hohlzylindrisch ausgebildet ist und ein erstes Ende und ein zweites Ende aufweist, wobei das erste Ende an die Ventilbasis (121) anschliesst und das zweite Ende an einen sich davon radial nach aussen erstreckenden Basiskörper (123).

9. Aufgussbehälter (20) nach einem der Ansprüche 1 bis 8, **dadurch gekennzeichnet, dass** am Bodenteil (21) ein Auflager (211) zur Anlage der Verschlusskappe (11) angeordnet ist.

10. Aufgussbehälter (20) nach Anspruch 9, **dadurch gekennzeichnet, dass** das Auflager (211) an einer Ausgabeöffnung (212) angeordnet ist und zumindest bereichsweise als ein Filtersieb (213) ausgebildet ist.

11. Aufgussbehälter (20) nach einem der Ansprüche 9 bis 10, **dadurch gekennzeichnet, dass** das Auflager (211) ein Führungselement (214) zur Führung der Verschlusskappe (11) aufweist.

12. Aufgussbehälter (20) nach einem der Ansprüche 1 bis 11, **dadurch gekennzeichnet, dass** der Ventilkörper (12) an das Wandteil (23) anschliesst, insbesondere, dass der Basiskörper (123) an das Wandteil (23) anschliesst.

## Claims

1. Infusion container (20) for receiving a dried infusion substance for the preparation of an infusion beverage, comprising a base part (21), a lid part (22) and a wall part (23) connecting the base part (21) and the lid part (22) and an inlet valve (10) wherein the inlet valve (10) is formed in the lid part (22), **characterized in that** the inlet valve (10) comprises a valve cap (11) and a valve body (12), wherein the valve cap (11) and the valve body (12) are connected to one another in a separable manner via a material thin point (13) and **in that** the infusion container (20) is expandable, wherein in particular the wall part (23) has a variable length.

2. Infusion container (20) according to Claim 1, **characterized in that** the closure cap (11) comprises a base body (111) and a wall (112) extending therefrom, which runs around along the base body (111).

3. Infusion container (20) according to Claim 2, **characterized in that** the wall (112) is configured to be hollow-cylindrical and has a first end and a second end, wherein the first end adjoins the base body (111) and the second end adjoins the material thin point (13).

4. Infusion container (20) according to one of Claims 1 to 3, **characterized in that** the material thin point (13) is configured to be circumferential around the closure cap (11).

5. Infusion container (20) according to one of Claims 1 to 4, **characterized in that** the material thin point (13) is configured as a tear-off film.

6. Infusion container (20) according to one of Claims 1 to 5, **characterized in that** the valve body (12) has a valve base (121) extending radially towards a centre, which adjoins the material thin point (13).

7. Infusion container (20) according to Claim 6, **characterized in that** a wall (122) extending therefrom, which runs around along the valve base (121) is arranged on the valve base (121) to form a step.

8. Infusion container (20) according to Claim 7, **characterized in that** the wall (122) is configured to be hollow-cylindrical and has a first end and a second end, wherein the first end adjoins the valve base (121) and the second end adjoins a base body (123) extending radially outwards therefrom.

9. Infusion container (20) according to Claim 8, **characterized in that** one or more support elements are formed on the base body (123) and/or on the valve base (121).Infusion container (20) according to one of Claims 1 to 8, **characterized in that** a support (211) for abutment of the closure cap (11) is arranged on the base part (21).

10. Infusion container (20) according to one of Claims 1 to 9, **characterized in that** the support (211) is arranged on a dispensing opening (212) and is configured at least in some areas as a filter sieve (213).

11. Infusion container (20) according to one of Claims 9 to 10, **characterized in that** the support (211) comprises a guide element (214) for guiding the closure cap (11).

12. Infusion container (20) according to one of Claims 1 to 11, **characterized in that** the valve body (12) adjoins the wall part (23), in particular that the base body (123) adjoins the wall part (23).

## Revendications

1. Récipient d'infusion (20) destiné à recueillir une matière sèche pour infusion en vue de la préparation d'une boisson infusée, comprenant une partie de fond (21), une partie formant couvercle (22) et une partie formant paroi (23), reliant la partie de fond (21) et la partie couvercle (22), et une valve d'entrée (10), sachant que la valve d'entrée (10) est réalisée dans la partie couvercle (22), que la valve d'entrée (10) présente un capuchon de fermeture (11) et un corps de valve (12), que le capuchon de fermeture (11) et le corps de valve (12) sont reliés l'un à l'autre de manière séparable par une zone de matériau aminci (13), **caractérisé en ce que** le récipient d'infusion (20) est extensible, et notamment la partie paroi (23) présentant une longueur variable.

2. Récipient d'infusion (20) selon la revendication 1, **caractérisé en ce que** le capuchon de fermeture (11) présente un corps de base (111) et une paroi (112) qui s'étend à partir de celui-ci de manière périphérique le long du corps de base (111).

3. Récipient d'infusion (20) selon la revendication 2, **caractérisé en ce que** la paroi (112) est réalisée sous une forme cylindrique creuse et présente une première extrémité et une deuxième extrémité, la première extrémité se raccordant au corps de base (111), et la deuxième extrémité se raccordant à la zone de matériau aminci (13).

4. Récipient d'infusion (20) selon une des revendications 1 à 3, **caractérisé en ce que** la zone de matériau aminci (13) est réalisée de manière à entourer le capuchon de fermeture (11).

5. Récipient d'infusion (20) selon une des revendications 1 à 4, **caractérisé en ce que** la zone de matériau aminci (13) est réalisée sous forme de film à arracher.

6. Récipient d'infusion (20) selon une des revendications 1 à 5, **caractérisé en ce que** le corps de valve (12) présente une base de valve (121) qui s'étend radialement en direction d'un centre et se raccorde à la zone de matériau aminci (13).

7. Récipient d'infusion (20) selon la revendication 6, **caractérisé en ce qu'**il est prévu sur la base de valve (121), une paroi (122) qui s'étend à partir de celle-ci, le long de la base de valve (121), de manière à l'entourer, en vue de former un gradin.

8. Récipient d'infusion (20) selon la revendication 7, **caractérisé en ce que** la paroi (122) est réalisée sous une forme cylindrique creuse et présente une première extrémité et une deuxième extrémité, la première extrémité se raccordant à la base de valve (121), et la deuxième extrémité se raccordant à un corps de base (123) qui s'étend radialement vers l'extérieur à partir de cette extrémité.

9. Récipient d'infusion (20) selon une des revendications 1 à 8, **caractérisé en ce qu'**il est prévu sur la partie de fond (21), un support (211) destiné à l'appui du capuchon de fermeture (11).

10. Récipient d'infusion (20) selon la revendication 9, **caractérisé en ce que** le support (211) est disposé sur une ouverture de distribution (212) et est réalisé au moins par portions sous forme de tamis filtrant (213).

11. Récipient d'infusion (20) selon une des revendications 9 à 10, **caractérisé en ce que** le support (211) présente un élément de guidage (214) destiné à guider le capuchon de fermeture (11).

12. Récipient d'infusion (20) selon une des revendications 1 à 10, **caractérisé en ce que** le corps de valve (12) se raccorde à la partie paroi (23), en particulier **en ce que** le corps de base (123) se raccorde à la partie paroi (23).
